(19) Europäisches Patentamt
European Patent Office
Office européen des brevets

(11) **EP 3 656 489 A1**

(12) **EUROPÄISCHE PATENTANMELDUNG**

(43) Veröffentlichungstag:
**27.05.2020 Patentblatt 2020/22**

(51) Int Cl.:
***B22F 3/105*** *(2006.01)*    ***B33Y 50/02*** *(2015.01)*

(21) Anmeldenummer: **18207810.5**

(22) Anmeldetag: **22.11.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Goldammer, Matthias**
  **80687 München (DE)**
• **Hanebuth, Henning**
  **85652 Pliening OT Gelting (DE)**

(54) **REGELUNGSVERFAHREN FÜR DIE ADDITIVE HERSTELLUNG**

(57)    Es wird ein Regelungsverfahren für die additive Herstellung eines Bauteils (10) angegeben. Das Verfahren umfasst, a), das Erfassen von ortsaufgelösten Temperaturdaten (T) einer additiv aufgebauten Schicht (1, 2) während der Herstellung des Bauteils (10), b), das Bestimmen mindestens einer region-ofinterest (ROI) der Schicht (1), welche während der Herstellung des Bauteils (10) bearbeitet werden soll, c), das Klassifizieren von Temperaturwerten (T, T1, T2) der region-ofinterest (ROI), d), das Bilden eines Mittelwertes (M) der klassifizierten Temperaturwerte (T), und, e), das Ansteuern einer Bearbeitungseinrichtung (20) mit dem gebildeten Mittelwert (M) als Eingangswert, um die Schicht (1) zu bearbeiten. Weiterhin wird eine entsprechende Vorrichtung, ein Computerprogrammprodukt, und ein additives Herstellungsverfahren angegeben.

FIG 2

**Beschreibung**

Die vorliegende Erfindung betrifft ein Regelungsverfahren für die additive Herstellung eines Bauteils, vorzugsweise in der pulverbett-basierten Herstellung. Weiterhin werden eine Vorrichtung, ein Computerprogrammprodukt sowie ein Verfahren zur additiven Herstellung des Bauteils angegeben, welches die beschriebene Regelung nutzt.

Das Bauteil ist vorzugsweise für den Einsatz in einer Strömungsmaschine, vorzugsweise im Heißgaspfad einer Gasturbine vorgesehen. Das Bauteil besteht vorzugsweise aus einer Superlegierung, insbesondere einer nickel- oder kobaltbasierten Superlegierung. Die Legierung kann beispielsweise ausscheidungsgehärtet oder mischkristallgehärtet sein.

In Gasturbinen wird thermische Energie und/oder Strömungsenergie eines durch Verbrennung eines Brennstoffs, z.B. eines Gases, erzeugten Heißgases in kinetische Energie (Rotationsenergie) eines Rotors umgewandelt. Dazu ist in der Gasturbine ein Strömungskanal ausgebildet, in dessen axialer Richtung der Rotor bzw. eine Welle gelagert ist. Wird der Strömungskanal von einem Heißgas durchströmt, werden die Laufschaufeln mit einer Kraft beaufschlagt, die in ein auf die Welle wirkendes Drehmoment umgewandelt wird, das den Turbinenrotor antreibt, wobei die Rotationsenergie z.B. zum Betrieb eines Generators genutzt werden kann.

Moderne Gasturbinen sind Gegenstand stetiger Verbesserung, um ihre Effizienz zu steigern. Dies führt allerdings unter anderem zu immer höheren Temperaturen im Heißgaspfad. Die metallischen Materialien für Laufschaufeln, insbesondere in den ersten Stufen, werden ständig hinsichtlich ihrer Festigkeit bei hohen Temperaturen (Kriechbelastung, thermomechanische Ermüdung) verbessert.

Die generative oder additive Fertigung wird aufgrund ihres disruptiven Potenzials zunehmend interessant auch für die industrielle Serienherstellung der oben genannten Turbinenkomponenten, wie beispielsweise Turbinenschaufeln oder Brennerkomponenten.

Additive Herstellungsverfahren umfassen beispielsweise als Pulverbettverfahren das selektive Laserschmelzen (SLM) oder Lasersintern (SLS), oder das Elektronenstrahlschmelzen (EBM).

Ein Verfahren zum selektiven Laserschmelzen ist beispielsweise bekannt aus EP 2 601 006 B1.

Additive Fertigungsverfahren (englisch: "additive manufacturing") haben sich weiterhin als besonders vorteilhaft für komplexe oder kompliziert oder filigran designte Bauteile, beispielsweise labyrinthartige Strukturen, Kühlstrukturen und/oder Leichtbau-Strukturen erwiesen. Insbesondere ist die additive Fertigung durch eine besonders kurze Kette von Prozessschritten vorteilhaft, da ein Herstellungs- oder Fertigungsschritt eines Bauteils weitgehend auf Basis einer entsprechenden CAD-Datei und der Wahl entsprechender Fertigungsparameter erfolgen kann.

Der vorliegend beschriebene Ausdruck "Computerprogrammprodukt" kann z.B. ein Computerprogramm-Mittel darstellen oder umfassen, und beispielsweise als Speichermedium, wie z.B. Speicherkarte, USB-Stick, CD-ROM, DVD, oder auch in Form einer herunterladbaren Datei von einem Server in einem Netzwerk bereitgestellt oder umfasst werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Ein allgegenwärtiges Problem bei additiven Herstellungsverfahren für hochbelastete oder hochbelastbare Bauteile sind die strukturellen Eigenschaften bzw. Materialeigenschaften, welche konventionellen Fertigungstechniken häufig nachstehen. Um bessere Materialeigenschaften in der additiven Fertigung zu erreichen, kann zur besseren Steuerung des Aufheiz- und Abkühlverhaltens zusätzlich zum Laser eine weitere Heizquelle eingesetzt werden. Bei der Verarbeitung von Metallen, insbesondere Superlegierungen, eignen sich hierfür Induktionsheizsysteme, die allerdings durch die ungleichmäßige Einbringung der Heizleistung zusätzlich eine mechanische Positionierung der Induktionsspule(n) benötigen.

Die Heizleistung muss ebenfalls kontrolliert werden, da die Geometrie sehr starken Einfluss auf die Erwärmung bzw. die Einkoppeleffizienz oder Wirkung der Heizung hat. Für die Temperaturregelung und/oder -erfassung kann eine Infrarotkamera eingesetzt werden, die das vollständige Baufeld (einer AM-Anlage) überblickt oder erfassen kann. Die Bildinformation kann über eine Kalibrierung in eine Temperatur umgerechnet und beispielsweise an der Position der Spulen ausgewertet werden. Möglicherweise wird dabei nur eine feste Position ("region-of-interest") innerhalb des Bildes ausgewertet, die mit der Spule dann im Bild von einer Position zur nächsten verschoben werden kann. Diese Temperatur kann weiterhin an einen Regler oder eine Regeleinrichtung mit festen Parametern übergeben werden. Nach einer Positionsverschiebung, beispielsweise zur Erwärmung eines weiteren Bereichs einer aufgebauten oder aufzubauenden Schicht im Wege der Herstellung des Bauteils, erreicht die Spule typischerweise eine weitere (kalte) Stelle und regelt die Heizleistung erneut.

Die in konventionellen Heizsystemen eingesetzte Regelung kombiniert häufig ein mit einer Spule zur induktiven Erwärmung mitgeführtes Pyrometer, das auf einen festen, beispielsweise durch das Spulenauge gerichtet ist und mit festen Regelparametern, beispielsweise eines PID-Reglers, geregelt wird. Das Pyrometer mittelt dabei über die Größe des Messflecks und eine Auswertung innerhalb des Messflecks erfolgt nicht.

Ein Problem, welches auftritt, ist, dass das Bild einer Infrarotkamera, Wärmebildkamera oder Thermographieeinrichtung kein ideales Bild liefert, sondern die einzelnen erfassten "Pixel" stark rauschen. Zusätzlich ist die Temperatur in Spulennähe oder nahe des entsprechenden Bereichs der Schicht nicht konstant, sondern stark ortsabhängig oder positionsabhängig. Daher muss zum einen die "region of interest" groß genug gewählt werden, um den relevanten Bereich weitestgehend abzudecken. Zudem darf nicht nur ein einzelner Pixel (zum Beispiel das Maximum) ausgewertet werden, da dieser Wert stark schwankt und dadurch die Regelung erschwert wird. Daher besteht für eine stabile Regelung ein Bedarf für eine Lösung, die zum einen einen verlässlichen Wert nahe des Maximums innerhalb der region-of-interest liefert, aber nicht dem Rauschverhalten eines Einzelpixels unterliegt.

Es ist daher eine Aufgabe der vorliegenden Erfindung, Mittel anzugeben, welche das oben beschriebene Problem lösen.

Diese Aufgabe wird durch den Gegenstand der unabhängigen Patentansprüche gelöst. Vorteilhafte Ausgestaltungen sind Gegenstand der abhängigen Patentansprüche.

Ein Aspekt der vorliegenden Erfindung betrifft ein Regelungsverfahren oder Verfahren zum Regeln bzw. Bereitstellen von Regelungsdaten für die additive Herstellung eines Bauteils, insbesondere die pulverbettbasierte Herstellung.

Das Verfahren umfasst das Erfassen von ortsaufgelösten Temperaturdaten oder Temperaturwerten einer additiv aufgebauten Schicht (Bauteilschicht) während der Herstellung des Bauteils. Die genannten Daten oder Werte werden dazu vorzugsweise an mehreren Positionen der Schicht oder auf der Schicht erfasst und/oder gespeichert.

Diese genannte Schicht kann eine von vielen hundert oder tausend Schichten bezeichnen, welche additiv über Pulverbettprozesse nacheinander durch selektive Bestrahlung mit einem Laser- oder Energiestrahl aufgebaut werden.

Der Ausdruck "während" im Zusammenhang mit der additiven Herstellung des Bauteils soll vorliegend bedeuten, dass beispielsweise eine Schicht zwar insgesamt während der Herstellung des Bauteils, jedoch (schichtweise) nach dem jeweiligen Verfestigen der Schicht vorzugsweise von der Bearbeitungsvorrichtung bearbeitet wird.

Das Verfahren umfasst weiterhin das Bestimmen mindestens einer definierten region-of-interest ("Bereich von Interesse") der Schicht, welche während der Herstellung des Bauteils bearbeitet werden soll.

Der Bereich bzw. die region-of-interest bezeichnet vorzugsweise einen ausgewählten geometrischen Bereich in Aufsicht auf die jeweilige aufgebaute Schicht betrachtet. Der Bereich bezeichnet weiterhin zweckmäßigerweise einen Bereich, in dem die Temperaturdaten erfasst, gespeichert oder ausgewertet werden sollen. Der Bereich von Interesse wird vorzugsweise durch eine definierte aber nachträgliche, also nach dem Bestimmen, erfolgende Bearbeitung der Schicht definiert, insbesondere durch Koordinaten einer beweglichen Bearbeitungseinrichtung (siehe weiter unten).

Das Verfahren umfasst weiterhin das Klassifizieren, Auswählen oder Einteilen von Temperaturwerten der mindestens einen region-of-interest, beispielsweise anhand mindestens einer definierten Klasse von Temperaturwerten. Diese Klassifizierung kann histogrammartig erfolgen, wobei eine Wertemenge anhand der Klassenbreite in Klassen eingeteilt wird.

Das Verfahren umfasst weiterhin das Bilden eines Mittelwertes der klassifizierten Temperaturwerte. Bei dem Mittelwert kann es sich beispielsweise um einen arithmetischen, einen geometrischen oder einen quadratischen Mittelwert handeln.

Das Verfahren umfasst weiterhin das Ansteuern oder Regeln einer Bearbeitungseinrichtung mit dem gebildeten Mittelwert als Eingangswert, um die Schicht zu bearbeiten. Mit der Bearbeitung kann vorzugsweise eine Vorwärmung oder Erwärmung der Schicht in der region-of-interest gemeint sein. Eine Bearbeitung durch Vorwärmung kann sich vorliegend auch auf eine noch nicht verfestigte oder aufgebaute Schicht des Bauteils sondern eine frisch aufgetragene Basismaterialschicht für das Bauteil beziehen.

Die vorliegend beschriebenen Mittel sind vorzugsweise geeignet, um eine Bearbeitung oder Vorwärmung des Bauteils oder einer nachfolgend herzustellenden Bauteilschicht, auf eine Temperatur von über 1000 °C zu erwärmen.

In einer Ausgestaltung ist der Mittelwert der klassifizierten Temperaturwerte ein arithmetischer Mittelwert. Alternativ kann der Mittelwert ein geometrischer oder quadratischer Mittelwert sein.

In einer Ausgestaltung wird der Mittelwert als Ist-Wert an eine Regelung oder Regelungseinrichtung, insbesondere umfassend einen PID-Regler, übergeben oder entsprechend verwendet. Der genannte Regler kann sowohl softwaretechnisch also hardwaretechnisch ausgeführt werden.

Das beschriebene Verfahren ermöglicht beispielsweise gegenüber einer Temperaturregelung in der additiven Herstellung oder einer anderen Anwendung mit einem beweglichen und mitgeführten Pyrometer, eine Vereinfachung, da die Mitführung des Pyrometers beispielsweise von einer ersten Position zu einer zweiten Position auf der Schicht bewegt werden muss.

Gleichwohl erlaubt die Auswertung der erfassten Temperaturwerte in der region-of-interest beispielsweise im Gegensatz zur Ausführungsform mit einem Pyrometer eine dynamische oder zeitabhängige Auswertung der einzelnen Pixel oder Temperaturwerte. Eine solche Funktionalität könnte mit Pyrometern nur über eine Kombination von mehreren Instrumenten oder Systemen erreicht werden.

Weiterhin kann mit den präsentierten Mitteln zur Regelung ein deutlich verbessertes Rauschverhalten erzielt werden.

In einer Ausgestaltung ist das Verfahren ein computerimplementiertes Verfahren.

In einer Ausgestaltung werden die Temperaturwerte bzw. Temperaturdaten mittels einer Infrarotkamera, einer Wärmebildkamera oder thermographisch, beispielsweise über entsprechende Mittel zur thermographischen Temperaturerfassung, erfasst. Diese Ausgestaltung ist bevorzugt, da viele konventionelle additive Fertigungsanlagen bereits mit entsprechenden Geräten zur Temperaturmessung oder Aufnahme von Temperaturbildern ausgestattet sind.

In einer Ausgestaltung werden die Temperaturdaten oder -werte der Schicht nur in einer (oder mehrerer) region-of-interest erfasst, beispielsweise aber nicht in anderen Bereichen der Schicht bzw. des Thermobildes. Diese Ausgestaltung ist prozess- und dateneffizient und erlaubt es, den Regelungsaufwand zu minimieren.

In einer Ausgestaltung werden die Temperaturwerte aus den Temperaturdaten berechnet oder bestimmt. Die Temperaturdaten können dahingehend von den Temperaturwerten abweichen, da die Temperaturdaten vorzugsweise ein Temperatur- oder Wärmebild beschreiben können, aus welchem die entsprechenden konkreten Temperaturwerte erst noch extrahiert oder umgerechnet werden müssen.

In einer Ausgestaltung wird ein Histogramm von Temperaturwerten erstellt.

In einer Ausgestaltung wird - für das Klassifizieren - eine absolute bzw. relative Klassenhäufigkeit der Temperaturwerte bestimmt. Für die Bestimmung oder Konstruktion des Histogramms werden die Temperaturwerte beispielsweise anhand oder mithilfe einer definierten Klassenbreite eingeteilt, ausgewählt oder klassifiziert.

In einer Ausgestaltung werden die, insbesondere betragsmäßig, größten 10 % der Temperaturwerte aus der mindestens einen region-of-interest klassifiziert oder ausgewählt, bzw. vorausgewählt. Diese Ausgestaltung entspricht derjenigen eines Histogramms, bei dem die Flächeninhalte der einzelnen Rechtecke oder Klassen die relativen Klassenhäufigkeiten bezeichnen.

In einer Ausgestaltung werden die Temperaturwerte, insbesondere betragsmäßig, aus einem Bereich der größten 10 bis beispielsweise der größten 50 Werte aus der mindestens einen region-of-interest klassifiziert oder ausgewählt, beispielsweise vorausgewählt. Dieser Ausgestaltung entspricht derjenigen eines Histogramms, bei dem die Flächeninhalte der einzelnen Rechtecke oder Klassen die absoluten Klassenhäufigkeiten bezeichnen.

Die genannten Temperaturwerte sind vorliegend vorzugsweise kardinal skalierende Werte.

In einer Ausgestaltung umfasst die Bearbeitungsvorrichtung eine Induktionsheizvorrichtung zum Vorwärmen der Schicht.

In einer Ausgestaltung umfasst die Bearbeitungsvorrichtung eine Regelung, insbesondere eine PID-Regelung, welche den Mittelwert als Eingangswert erhält.

In einer Ausgestaltung werden in der additiven Herstellung des Bauteils eine Vielzahl von ausgewählten Bereichen bzw. regions-of-interest bestimmt und/oder bearbeitet. Gemäß dieser Ausgestaltung kann das beschriebene Verfahren besonders zweckmäßig und effektiv angewendet werden.

In einer Ausgestaltung regelt die Regelung die Induktionsheizvorrichtung zumindest teilweise kontinuierlich, dynamisch oder zeitabhängig. Diese Ausgestaltung ermöglicht eine besonders genaue und schnelle Regelung der Vorwärmung bzw. der Bearbeitung, sodass ein entsprechender additiver Herstellungsprozess hinsichtlich der erzielbaren Materialstruktur des Bauteils als auch der Prozesszeit entscheidend verbessert werden kann.

Ein weiterer Aspekt der vorliegenden Erfindung betrifft eine Vorrichtung zum Steuern der Bearbeitungseinrichtung, insbesondere einer Induktionsheizvorrichtung, welche beispielsweise zwei unabhängig voneinander bewegliche Induktionsspulen aufweist. Die Vorrichtung umfasst Mittel zur Ausführung des Regelverfahrens wie oben beschrieben. Bei diesen Mitteln kann es sich um ein Computerprogramm, ein Computerprogrammprodukt, ein Datenstrukturprodukt oder entsprechende andere Computerprogramm-Mittel handeln.

Die Vorrichtung umfasst weiterhin eine Temperaturerfassungseinrichtung, vorzugsweise eine Infrarotkamera oder eine Einrichtung zum thermographischen Erfassen von Temperaturdaten. So kann besonders einfach und zweckmäßig ein Temperaturbild einer additiv aufgebauten Schicht ermittelt und Temperaturdaten besonders einfach und schnell erfasst werden.

Die Vorrichtung umfasst weiterhin eine Regelungseinrichtung, insbesondere umfassend einen PID-Regler. Alternativ kann die Regelung mit einem PI-Regler, einem PD-Regler oder einem anderen Regler oder einer anderen Regelungseinrichtung durchgeführt werden.

In einer Ausgestaltung ist die Vorrichtung Teil einer additiven Herstellungsanlage, insbesondere eine Anlage zur pulverbett-basierten additiven Fertigung oder Herstellung.

Ein weiterer Aspekt der vorliegenden Erfindung betrifft ein Computerprogrammprodukt, umfassend Befehle, welche bei der Ausführung des Programms durch einen Computer diesen veranlassen, zumindest einen der oben beschriebenen Verfahrensschritte des Regelungsverfahrens, das heißt des Bestimmens, des Klassifizierens, des Bildens des Mittelwertes und/oder des Ansteuerns durchzuführen. Das Computerprogrammprodukt kann beispielsweise entsprechende Computerprogramm-Mittel umfassen, welche erforderlich sind, um beispielsweise entsprechende Algorithmen zur Lösung des beschriebenen Problems ablaufen zu lassen.

Ein weiterer Aspekt der vorliegenden Erfindung betrifft ein computerlesbares Medium, auf dem das oben genannte Computerprogramm bzw. Computerprogrammprodukt oder Teile davon gespeichert sein können.

Ein weiterer Aspekt der vorliegenden Erfindung betrifft ein Verfahren zur additiven Herstellung eines Bauteils, umfassend den schichtweisen additiven Aufbau des Bauteils aus einem pulverförmigen Basismaterial, wobei nach dem oder während des Verfestigen(s) einer Pulverschicht mittels eines Energiestrahls, diese Schicht anhand des Regelungsverfahren, wie beschrieben, bearbeitet wird. Die besonderen Vorteile der erfindungsgemäßen Regelung zeigen sich insbesondere bei dem eigentlichen Aufbauprozess in der durch das Wärmemanagement verbesserten Materialstruktur des Bauteils.

In einer Ausgestaltung wird eine Temperaturerfassungseinrichtung oder Kamera während der additiven Herstellung des Bauteils von einer ersten Position zu einer zweiten Position bewegt oder mitbewegt. Die erste Position kann eine erste region-of-interest beschreiben. Die zweite Position kann eine zweite region-of-interest beschreiben.

In einer anderen Ausgestaltung wird mindestens eine region-of-interest beispielsweise software- oder programmtechnisch während der additiven Herstellung des Bauteils von einer ersten Position zu einer weiteren oder zweiten Position (mit)bewegt.

Ein weiterer Aspekt der vorliegenden Erfindung betrifft ein Bauteil, welches gemäß dem Verfahren zur additiven Herstellung hergestellt oder herstellbar ist. Das Bauteil umfasst, beispielsweise im Gegensatz zu einem konventionell hergestellten Bauteil des Standes der Technik oder einem additiv hergestellten Bauteil des Standes der Technik eine weitgehend rissfreie und/oder spannungsarme, insbesondere einkristalline und/oder stängelkristalline, Mikrostruktur.

Ausgestaltungen, Merkmale und/oder Vorteile, die sich vorliegend auf das Regelungsverfahren, das Computerprogrammprodukt oder die Vorrichtung beziehen, können - wie dargelegt - ferner den additiven Herstellungsprozess oder das Bauteil selbst betreffen, oder umgekehrt.

Weitere Merkmale, Eigenschaften und Vorteile der vorliegenden Erfindung werden im Folgenden anhand von Ausführungsbeispielen unter Bezugnahme auf die beigefügten Figuren näher erläutert. Alle bisher und im Folgenden beschriebenen Merkmale sind dabei sowohl einzeln als auch in Kombination miteinander vorteilhaft. Es versteht sich, dass andere Ausführungsformen benutzt und strukturelle oder logische Änderungen vorgenommen werden können, ohne von dem Schutzumfang der vorliegenden Erfindung abzuweichen. Die folgende Beschreibung ist deshalb nicht in einschränkendem Sinne aufzufassen.

Der hier verwendete Ausdruck "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elemente verwendet werden.

Figur 1 zeigt eine schematische Schnittansicht eines Bauteils während seiner additiven Herstellung.

Figur 2 zeigt eine schematische Aufsicht auf einen Bauteilquerschnitt, welcher mit einer Bearbeitungseinrichtung bearbeitet wird.

Figur 3 deutet beispielhaft ein der Übersichtlichkeit halber stark vereinfachtes Histogramm von erfassten Temperaturwerten einer Schicht an.

Figur 4 deutet anhand einer schematischen Aufsicht auf eine verfestigte Bauteilschicht eine Abfolge von mehreren Bearbeitungsschritten an.

Figur 5 zeigt ein vereinfachtes Flussdiagramm zur Illustration von Verfahrensschritten des beschriebenen Verfahrens.

In den Ausführungsbeispielen und Figuren können gleiche oder gleich wirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis übertrieben dick oder groß dimensioniert dargestellt sein.

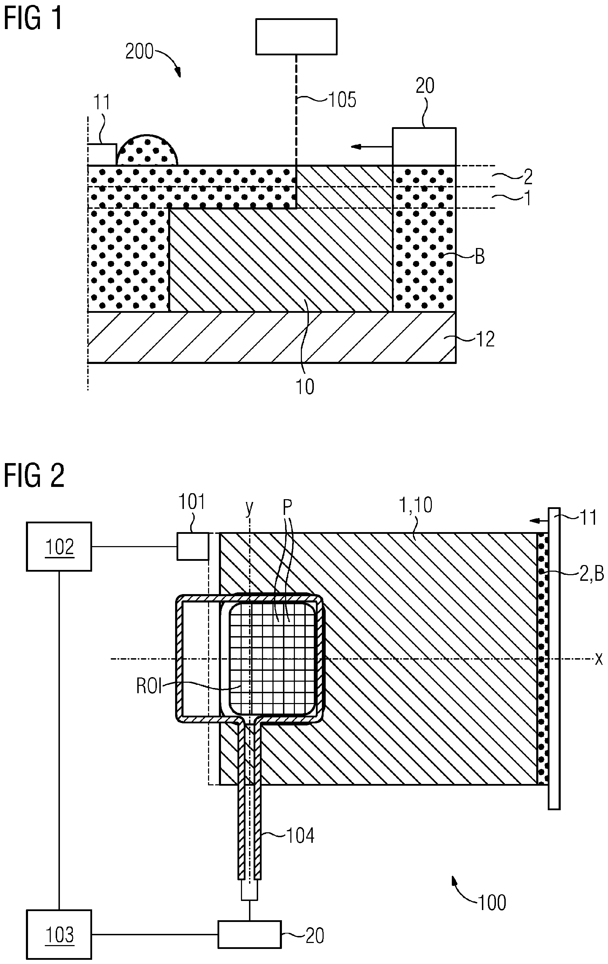

Figur 1 deutet anhand einer schematischen Schnittansicht die additive Herstellung eines Bauteils 10 aus einem Pulverbett an, vorzugsweise durch selektives Laserschmelzen oder Elektronenstrahlschmelzen. Eine entsprechende additive Herstellungsanlage ist mit dem Bezugszeichen 200 gekennzeichnet.

Ein Ausgangs- oder Basismaterial B für das Bauteil 10 wird dabei schichtweise selektiv von einem Energiestrahl, vorzugsweise einem Laserstrahl 105, gemäß der gewünschten (vorbestimmten) Geometrie bestrahlt und verfestigt. Das Bauteil wird dazu auf einem Substrat oder einer Bauplattform 12 hergestellt bzw. mit dieser verschweißt.

Die Plattform 12 dient dabei während der Herstellung gleichzeitig als mechanische Stütze, um das Bauteil vor thermischem Verzug zu bewahren. Nach der Verfestigung einer jeden Schicht, wird eine Herstellungsoberfläche (nicht explizit gekennzeichnet) vorzugsweise von einem Beschichter 11 neu mit Pulver B beschichtet, und das Bauteil so weiter aufgebaut. Lediglich exemplarisch sind in Figur 1 gestrichelt Schichten 1 und 2 angedeutet, deren Schichtdicke bei derartigen Prozessen üblicherweise zwischen 20 und 80 $\mu$m beträgt.

Bei dem Bauteil 10 handelt es sich vorzugsweise um ein Bauteil, welches im Heißgaspfad einer Strömungsmaschine, beispielsweise einer Gasturbine eingesetzt wird. Insbesondere kann das Bauteil eine Lauf- oder Leitschaufel, ein Segment oder Ringsegment, ein Brennerteil oder eine Brennerspitze, eine Zarge, eine Schirmung, ein Hitzeschild, eine Düse, Dichtung, einen Filter, eine Mündung oder Lanze, einen Resonator, einen Stempel oder einen Wirbler bezeichnen, oder einen entsprechenden Übergang, Einsatz, oder ein entsprechendes Nachrüstteil. Demgemäß handelt es sich bei dem Bauteil 10 vorzugsweise um ein in seinem bestimmungsgemäßen Betrieb thermisch und/oder mechanisch hochbelastetes Bauteil aus einer, beispielsweise kobalt- oder nickelbasierten, Superlegierung.

Eine Bearbeitungseinrichtung 20 ist ebenfalls an der rechten Seite einer Herstellungsoberfläche (rechts im Bild) angedeutet. Mittels der Bearbeitungseinrichtung 20 kann eine neu aufgebrachte Pulverlage oder eine frisch verfestigte oder bestrahlte Bauteilschicht zweckmäßigerweise vor- und/oder nachbehandelt werden. Diese Bearbeitung ist insbesondere vorteilhaft bzw. zweckmäßig, um eine vorteilhafte oder erforderliche Wärmebehandlung (Wärmemanagement) der entsprechenden Bauteile durchzuführen, vorzugsweise in-situ und/oder während des Aufbaus.

Die großen prozessinhärenten Temperaturgradienten übersteigen bei pulverbett-basierten Prozessen häufig $10^4$ K/s und verursachen demgemäß hohe chemische Ungleichgewichtszustände, Risse und/oder mechanische Spannungen. Daher ist es zweckmäßig, beispielsweise eine neu aufgebrachte Pulverschicht (vergleiche Bezugszeichen 2) oder eine bereits vollständig verfestigte Bauteilschicht (vergleiche Bezugszeichen 1) mit einer Bearbeitungseinrichtung (vergleiche Bezugszeichen 20) thermisch zu bearbeiten.

Die vorliegend beschriebenen Mittel für die Bearbeitung bzw. die Bearbeitungseinrichtung 20 sind vorzugsweise geeignet, eine Bearbeitung oder Vorwärmung des Bauteils 10 oder einer nachfolgend herzustellenden Bauteilschicht 2 auf eine Temperatur von über 1000 °C zu erwärmen.

Figur 2 zeigt eine schematische Aufsicht auf eine frisch mit dem Energiestrahl 105 bestrahlte und verfestigte Schicht 1. Wie in Figur 1 ist hier ein Beschichter 11 oder eine Beschichtungseinrichtung 11 zu erkennen, welche eingerichtet ist, für eine nachfolgend zu bestrahlende Schicht (vergleiche Bezugszeichen 2 in Figur 1) neues Pulver B aufzutragen. Der Beschichter 11 ist vorzugsweise in X-Richtung entlang einer Aufbaufläche beweglich und kann, zum Auftragen von neuem Pulver B, hin und her bewegt werden, um dabei Pulver beispielsweise aus einem Pulvervorrat (ebenfalls nicht explizit gekennzeichnet) auf einer Herstellungsfläche zu verteilen.

Gemäß der Darstellung der Figur 2 ist der Querschnitt des Bauteils 10 lediglich der Übersichtlichkeit halber rechteckförmig dargestellt. Bei Bauteilen, bei denen sich eine additive Fertigung anbietet bzw. lohnt, ist dies natürlich häufig nicht der Fall und der Bauteilquerschnitt kann eine komplizierte, beispielsweise nicht geschlossene, oder Hohlräume aufweisende Geometrie haben.

Im Unterschied zur Figur 1 ist, gemäß der vorliegenden Erfindung, eine Bearbeitungseinrichtung 20 zu erkennen, welche vorzugsweise eine induktive Heizeinrichtung umfasst oder darstellt. Alternativ kann die Bearbeitungseinrichtung beispielsweise durch ein anderes Prinzip Wärme in eine Bauteilschicht einbringen.

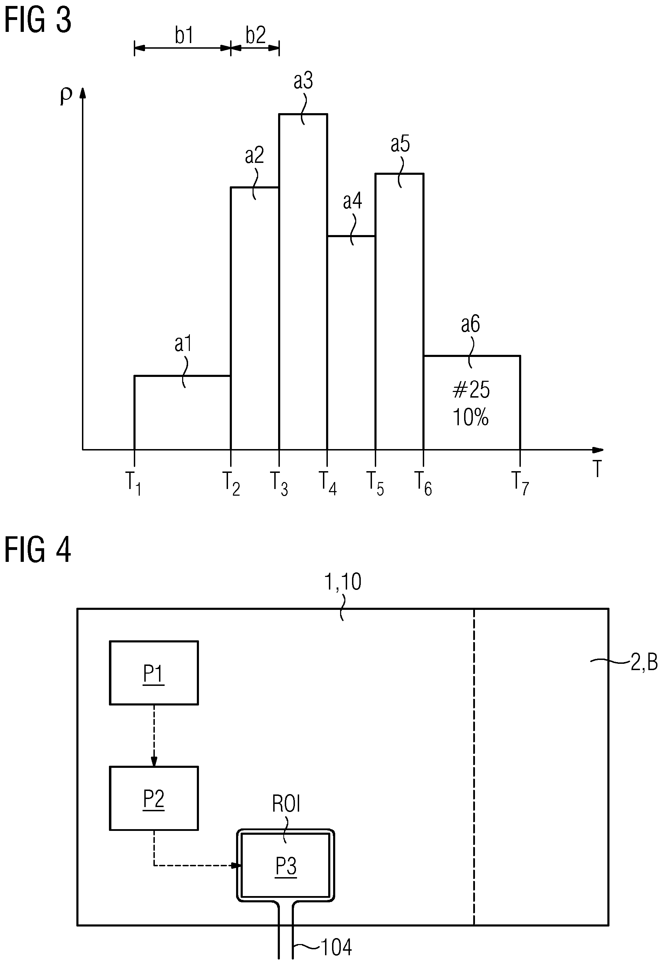

Eine konventionelle additive Herstellungsanlage (vergleiche Bezugszeichen 200 in Figur 1) umfasst vorzugsweise eine Temperaturerfassungseinrichtung 101, vorzugsweise eine Infrarotkamera, über welche beispielsweise pro bestrahlter Schicht ein vollständiges Temperaturbild der Schicht bzw. der Herstellungsoberfläche aufgenommen werden kann. Eine Bildinformation eines Pixels (vgl. Figur 2) aus dem Temperaturbild kann beispielsweise über eine Kalibrierung in einen Temperaturwert umgerechnet und an entsprechenden Positionen der späteren Bearbeitung (vergleiche Figur 3 weiter unten) ausgewertet werden.

Über einen Computer 102 oder eine Datenverarbeitungseinrichtung und vorzugsweise weiterhin eine Regelungseinrichtung 103 können erfasste Temperaturdaten, vorzugsweise das genannte Temperatur- oder Wärmebild der Schicht 1, gespeichert und an die Bearbeitungseinrichtung 20 übergeben oder diese entsprechend angesteuert werden.

Eine Vorrichtung 100 kann demgemäß eingerichtet sein, die Bearbeitungseinrichtung 20 zu steuern und weiterhin die genannten Computerprogramm-Mittel (vergleiche Bezugszeichen CPP weiter unten), die Temperaturerfassungseinrichtung 101, den Computer 102 und beispielsweise die Regelungseinrichtung 103 umfassen. Demgemäß kann die Vorrichtung 100 mit der Bearbeitungseinrichtung 20 gekoppelt oder verschaltet sein.

Die Bearbeitungseinrichtung 20 weist in der in Figur 2 gezeigten Ausführungsform eine induktive Heizeinrichtung bzw. eine Induktionsspule 104 auf. Obwohl dies nicht explizit dargestellt ist, kann die Einrichtung 20 auch eine Mehrzahl von Induktionsspulen aufweisen, beispielsweise eine entlang der X-Richtung verschiebbar oder beweglich angeordnete Spule und eine entlang der Y-Richtung verschiebbar oder beweglich angeordnete Spule. Die genannten Spulen können auch derart und ungestört oder unabhängig voneinander überlagert werden, dass nur in einem ausgewählten Bereich (vgl. englisch "region-of-interest" und Bezugszeichen ROI) eine gewünschte oder vordefinierte Erwärmung, beispielsweise eine Erwärmung von über 1000 °C erzielt werden kann.

Der "Bereich von Interesse" bzw. die region-of-interest, der in Figur 2 beispielhaft links dargestellt ist, kann auch dem Bereich eines "Spulenauges" entsprechen und mithin einen Bereich darstellen, in dem eine besonders genaue Temperaturüberwachung und -regelung erforderlich ist, um eine vorteilhafte Struktur der Schicht 1 bzw. des Bauteils 10 zu erzielen. Der Bereich ROI ist in Figur 2 mittels Rasterlinien in eine Vielzahl (ca. 80) von Pixeln P unterteilt. Diese Einteilung ist weiterhin lediglich exemplarisch. In einer realen Anwendung des beschriebenen Verfahrens bzw. der beschriebenen Vorrichtung kann die region-of-interest mehrere hundert Temperaturwerte, beispielsweise 200, 300, 400 oder 500 Temperaturwerte, umfassen; bzw. kann darin diese Anzahl der Werte von der Temperaturerfassungseinrichtung 101 erfasst werden.

Gemäß der vorliegenden Erfindung werden Temperaturdaten oder Temperaturwerte T der Schicht 1 entsprechend ortsaufgelöst von der Temperaturerfassungseinrichtung 101 erfasst und/oder gespeichert.

Die region-of-interest kann beispielsweise durch (vordefinierte) Positionen oder Positionsdaten der Bearbeitungseinrichtung, genauer der Induktionsspule 104 oder dessen "Auge" bestimmt sein.

Statt, wie im Stand der Technik üblich, beispielsweise ein Pyrometer für die Temperaturerfassung bzw. Bearbeitung der Schicht 1 zu einer Vielzahl von Positionen (vergleiche Figur 4 weiter unten) mitzuführen und auf einen festen Punkt innerhalb des Spulenauges zu richten und dort die Temperatur lediglich an einem Punkt pyrometrisch zu erfassen, erfolgt nun gemäß der vorliegenden Erfindung eine Klassifizierung von Temperaturwerten der region-of-interest. Dies kann ähnlich zur Konstruktion eines Histogramms (vergleiche Figur 3 weiter unten) erfolgen.

Anhand des durch die Temperaturerfassungseinrichtung erfassten Temperaturbildes werden insbesondere entsprechende Temperaturwerte oder Pixel P erfasst. Dies kann durch eine Kalibrierung oder entsprechende Umrechnung von Bilddaten in Temperaturwerte erfolgen. Die erfassten Temperaturwerte T in der region-of-interest werden nun aufgrund der erforderlichen Regelungsgüte und -effizienz vorzugsweise automatisch oder computerimplementiert klassifiziert.

Für eine zweckmäßige Temperaturregelung in dem beschriebenen Kontext ist es weiterhin am zweckmäßigsten, einen verlässlichen Wert bzw. Mittelwert für eine maximale Temperatur innerhalb der region-of-interest bereitzustellen. Daher werden in einer vorteilhaften Ausgestaltung der vorliegenden Erfindung (vergleiche ebenso Figuren 3, 4 und 5 weiter unten) die betragsmäßig größten 10 % der erfassten Temperaturwerte klassifiziert oder zur weiteren Regelung herangezogen. Alternativ können auch beispielsweise die betragsmäßig größten 10, 20, 30, 40, oder 50 Werte oder andere Werte aus der region-of-interest ausgewählt werden, beispielsweise die größten 25 Temperaturwerte.

Der Einfachheit halber ist in Figur 2 nur eine Spule 104 gekennzeichnet, welche einen auszuwählenden Bereich ROI in vordefinierte Art erwärmen kann. Die Spule 104 ist entlang der X-Richtung beweglich und verfahrbar angeordnet. Auf gleiche Art ist es möglich, eine ähnliche Spule entlang der Y-Richtung beweglich vorzusehen, so dass der ausgewählte Bereich ROI von beiden Spulen fokussiert und zweckmäßig erwärmt werden kann.

Die Bearbeitungseinrichtung 20 ist ferner vorzugsweise eingerichtet, durch ihre Beweglichkeit über beliebige Positionen über dem Pulverbett bzw. der Schichtoberfläche bewegt zu werden, derart, dass sowohl eine bereits verfestigte Bauteilschicht (vergleiche Schicht 1) als auch eine Schicht neu aufgetragenen Basismaterials oder Pulvers (vergleiche Schicht 2) erwärmt werden kann. Im Gegensatz zur festen Bauteilstruktur ist jedoch eine Erwärmung des Pulvers (vgl. links in Figur 2) vernachlässigbar, und die aufgenommene Heizleistung wird von den unten liegenden, bereits verfestigten Schichten dominiert. Diese Schichten sind beim SLM-Verfahren in der Regel deutlich dünner als die Eindringtiefe des Induktionsfeldes bzw. des die Wirbelströme induzierenden magnetischen Flusses der Spule(n) 104.

Figur 3 zeigt ein schematisches vereinfachtes Histogramm mit klassifizierten Temperaturwerten der Schicht 1 bzw. des Bauteils 10.

Auf der Abszisse sind Temperaturwerte T eingetragen, welche vorzugsweise erfassten Temperaturen oder Temperaturwerten aus der region-of-interest (vergleiche Figur 2) entsprechen.

Insbesondere sind beispielhaft und vereinfacht sechs Temperaturklassen klassifiziert oder eingeteilt; eine erste Temperaturklasse zwischen T1 und T2, eine zweite Temperaturklasse zwischen T2 und T3, eine dritte Temperaturklasse zwischen T3 und T4, eine vierte Temperaturklasse zwischen T4 und T5, eine fünfte Temperaturklasse zwischen T5 und T6 und eine sechste Temperaturklasse zwischen T6 und T7. Beispielhaft ist weiterhin gezeigt, dass die Klassenbreiten (vergleiche beispielhaft b1 für die erste Temperaturklasse und b2 für die zweite Temperaturklasse) der zweiten, dritten, vierten und fünften Temperaturklasse gleich und halb so groß sind wie die Klassenbreiten der ersten und der sechsten Temperaturklasse.

Die unterschiedlichen Klassenbreiten können vorliegend beispielsweise nur eines oder mehrere Zehntel Grad Celsius betragen.

Der Flächeninhalt der Rechtecke (vergleiche beispielhaft a1 für die erste Temperaturklasse und a2 für die zweite Temperaturklasse), welcher jeweils die relative oder absolute Klassenhäufigkeit bezeichnet, entspricht dem Produkt aus der jeweiligen Klassenbreite $b_n$ und der Häufigkeitsdichte p. Entsprechend ist die Häufigkeitsdichte p auf der Ordinate des Histogramms aufgetragen.

Die Klassenhäufigkeit spiegelt entweder einen absoluten oder einen relativen Wert wider. Der absolute Wert entspricht der Anzahl an Werten, die zu einer Klasse gehören. Der relative Wert hingegen drückt aus, wieviel Prozent der Werte einer Klasse angehören.

Wie oben anhand der Beschreibung von Figur 2 angedeutet, können beispielsweise die (betragsmäßig) größten 10 % der Temperaturwerte, welche aus jeweils mindestens einer region-of-interest erfasst werden, zur Mittelwertbildung herangezogen werden. Alternativ oder zusätzlich können auch beispielsweise die (betragsmäßig) größten 10, 20, 30, 40, oder 50 absoluten Werte, vorzugsweise die größten 25 Werte verwendet werden. Demgemäß haben die Temperaturwerte der sechsten Temperaturklasse (mit Klassenhäufigkeit a6) des Histogramms für die vorliegende Anwendung des Regelverfahrens eine größere Bedeutung als beispielsweise die Temperaturwerte der Temperaturklasse 1 der Klassenhäufigkeit a1. Für eine andere Anwendung oder dieselbe können aber auch weitere Temperaturklassen einen wertvollen Input für die Temperaturregelung darstellen, um die Bearbeitung der Schicht bzw. des Bauteils 10 während der Herstellung zu optimieren.

Das Einteilen oder Klassifizieren der erfassten Temperaturdaten kann beispielsweise mittels maschineller Optimierungsverfahren, beispielsweise darstellend oder umfassend künstliche neuronale Netze oder genetische bzw. evolutionäre Algorithmen, durchgeführt werden.

Gemäß der vorliegenden Erfindung wird nun ein Mittelwert, vorzugsweise der arithmetische Mittelwert, der klassifizierten Temperaturwerte gebildet. Mit diesem Wert kann dann nachfolgend die Bearbeitungseinrichtung 20 als Ist- oder Eingangswert angesteuert oder geregelt werden, um beispielsweise die Schicht 1 (vergleiche Figur 1) zu bearbeiten. Vorteilhafterweise kann durch die Verwendung des Mittelwerts der klassifizierten Werte ein robustes und akkurates Regelsystem zur Verfügung gestellt werden, welches ein deutlich verbessertes Rauschverhalten (vergrößertes Signal-Rausch-Verhältnis) aufweist, als beispielsweise bei der Auswertung eines Einzelpixels mit einem Pyrometer, welches, wie oben angedeutet, beispielsweise nur einen Messfleck innerhalb der region-of-interest auswertet.

Durch mehrfaches Senden oder Erfassen einer Information lässt sich das Rauschen reduzieren. Da Rauschen stochastisch auftritt, wächst beispielsweise auch die Standardabweichung des Rauschsignals bei einer Summation von n Übertragungen nur um den Faktor $\sqrt{n}$, während das Signal um den Faktor n zunimmt. Das Signal-Rausch-Verhältnis bezogen auf die Signalamplitude steigert sich um $\sqrt{n}$.

Figur 4 zeigt anhand einer zur Darstellung der Figur 2 ähnlichen Darstellung eine Abfolge von Bearbeitungsschritten, anhand derer eine verfestigte Bauteilschicht 1, vorzugsweise unmittelbar, nach einer Verfestigung mittels der beschriebenen Bearbeitungseinrichtung 20 bearbeitet, vorzugsweise induktiv erwärmt wird. Eine Regelung oder ein Ansteuern der Bearbeitungseinrichtung 20 erfolgt also erfindungsgemäß vorteilhafterweise mit dem gebildeten Mittelwert als Eingangswert.

Der Mittelwert kann demgemäß ein Ist-Wert für einen PID-Regler bezeichnen, welcher als Regelungseinrichtung 103 fungieren kann. Die Regelungseinrichtung, beispielsweise aufweisend einen PI-, PD- oder PID-Regler kann beispielsweise softwaretechnisch als auch über eine Hardware eingerichtet sein und beispielsweise auf dem Computer 102 oder einer anderen programmierbaren Einrichtung ausgeführt werden.

Eine beispielsweise auf die Legierung des Bauteils maßgeschneiderte Wärmebehandlung kann beispielsweise erforderlich oder vorteilhaft sein, um Spannungen im Bauteil zu lösen, Heißrisse zu vermeiden oder zu verhindern oder auch, um große prozessinhärente Temperaturgradienten zu verhindern, welche ihrerseits entstehende Risse, chemische Ungleichgewichte oder grundsätzlich eine Schweißbarkeit des Basismaterials unterbinden.

Bei den entsprechenden Bearbeitungsbereichen (vergleiche ROI an den Positionen P1, P2 und P3 in Figur 3) kann es sich beispielsweise um diejenigen Positionen handeln, welche auch gemäß einer Bestrahlungsstrategie nacheinander bestrahlt werden. Alternativ kann es sich um besonders ausgewählte Bereiche handeln, beispielsweise Regionen in der Schicht, welche besonders anfällig für Strukturdefekte oder sonstige, beispielsweise festigkeitsrelevante Faktoren sind. Die Positionen können weiterhin - anders als in Figur 3 dargestellt - kontinuierlich oder stetig ineinander übergehen.

Typischerweise wird die Spule 104 bzw. die Bearbeitungseinrichtung 20 nach der Bearbeitung einer ersten Position P1 an eine folgende zweite Position P2 und/oder folgende dritte Position P3 gefahren, welche dann eine noch nicht erwärmte oder kalte Stelle anzeigt, und beispielsweise in einer entsprechenden ROI der Position bearbeitet werden kann. Statt, wie in Figur 3 gekennzeichnet, drei Positionen und/oder ROIs können in der Realität pro Schicht beispielsweise mehrere hundert oder tausend Positionen angefahren und/oder bearbeitet werden.

Die Temperaturerfassungseinrichtung 101 kann dabei ebenso wie die Bearbeitungseinrichtung 20 von einer Position zur nächsten mitbewegt werden. Dies ist jedoch nicht unbedingt erforderlich. Bei geeigneter Positionierung kann auch lediglich ein einzelnes Temperaturbild der Schicht ausreichen, um die Bearbeitung auf Basis der erfassten Temperaturwerte erfolgreich durchzuführen. Dann kann die region-of-interest beispielsweise daten-, software- oder programmtechnisch während der additiven Herstellung des Bauteils von einer ersten Position zu einer weiteren oder zweiten Position, beispielsweise simultan mit der Bewegung der Bearbeitungseinrichtung 20 verschoben werden. Mit anderen Worten kann demgemäß lediglich ein entsprechender Messbereich (virtuell) verschoben werden.

Gemäß der vorliegenden Erfindung werden die Temperaturdaten, wie oben beschrieben, an verschiedenen Positionen der additiv aufgebauten Schicht 1, vorzugsweise in den bestimmten regions-of-interest ROI, gespeichert und/oder erfasst (vergleiche Verfahrensschritte a) und b) weiter unten); und nicht etwa innerhalb des ganzen aufgenommenen Temperaturbildes. Weiterhin können die Temperaturwerte während des Bearbeitens der Schicht, beispielsweise entlang der Positionen P1 bis P3 positionsabhängig oder pro ROI gespeichert und/oder erfasst werden.

Die Regelung der Temperatur bzw. die Bearbeitung der Schicht 1 mit der Bearbeitungseinrichtung 20 kann weiterhin vorliegend quasi-kontinuierlich durchgeführt werden. Insbesondere kann eine dichte Abfolge von Bildern der Infrarotkamera, welche beispielsweise Daten oder Bilder mit 50 Hz erfassen kann, für eine quasikontinuierliche oder zeitlich abhängige Regelung herangezogen werden; und dies pro region-of-interest und für jede additiv aufgebaute oder aufzubauende Schicht.

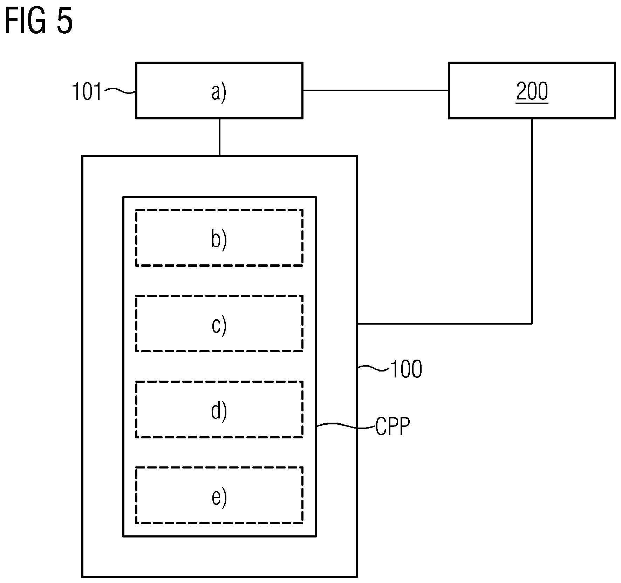

Figur 5 zeigt ein schematisches Flussdiagramm, welches andeutet, dass Verfahrensschritte des beschriebenen Verfahrens beispielsweise einzeln oder kumulativ gemäß der vorliegenden Erfindung von einem Computerprogramm oder computerimplementiert durchgeführt werden können. Insbesondere können die Schritte des Bestimmens der region-of-interest b), des Klassifizierens der Temperaturwerte c), des Bildens des Mittelwertes d) und des Ansteuerns e) programmtechnisch durchgeführt werden. Dies ist in Figur 5 durch das Computerprogrammprodukt CPP angedeutet. Das Computerprogrammprodukt oder Computerprogramm kann weiterhin Teil der Vorrichtung 100 sein, welche wiederum an die Bearbeitungseinrichtung 20 und/oder an die additive Herstellungsanlage 200 gekoppelt oder mit dieser verschaltet sein kann. Weiterhin kann das Computerprogrammprodukt CPP möglicherweise in einen Prozessor oder einen Computer der Herstellungsanlage 200 eingelesen werden.

Die Erfindung ist nicht durch die Beschreibung anhand der Ausführungsbeispiele auf diese beschränkt, sondern umfasst jedes neue Merkmal sowie jede Kombination von Merkmalen. Dies beinhaltet insbesondere jede Kombination von Merkmalen in den Patentansprüchen, auch wenn dieses Merkmal oder diese Kombination selbst nicht explizit in den Patentansprüchen oder Ausführungsbeispielen angegeben ist.

**Patentansprüche**

1. Regelungsverfahren für die additive Herstellung eines Bauteils (10), umfassend:

 - a) Erfassen von ortsaufgelösten Temperaturdaten (T) einer additiv aufgebauten Schicht (1, 2) während der Herstellung des Bauteils (10),
 - b) Bestimmen mindestens einer region-of-interest (ROI) der Schicht (1), welche während der Herstellung des Bauteils (10) bearbeitet werden soll,
 - c) Klassifizieren von Temperaturwerten (T, T1, T2) der region-of-interest (ROI),
 - d) Bilden eines Mittelwertes (M) der klassifizierten Temperaturwerte (T), und
 - e) Ansteuern einer Bearbeitungseinrichtung (20) mit dem gebildeten Mittelwert (M) als Eingangswert, um die Schicht (1) zu bearbeiten.

2. Verfahren nach Anspruch 1, wobei die Temperaturdaten (T) mittels einer Infrarotkamera (101) oder thermografisch erfasst werden.

3. Verfahren nach Anspruch 1 oder 2, wobei die Temperaturdaten (T) nur in einer "region of interest" (ROI) der Schicht erfasst werden und wobei die Temperaturwerte aus den Temperaturdaten (T) berechnet oder bestimmt werden.

4. Verfahren nach einem der vorhergehenden Ansprüche, wobei ein Histogramm von Temperaturwerten erstellt wird und - für das Klassifizieren - eine absolute bzw. relative Klassenhäufigkeit (a1, a2) der Temperaturwerte (T) bestimmt wird.

5. Verfahren nach einem der vorhergehenden Ansprüche, wobei die größten 10 % der Temperaturwerte (T) aus der mindestens einen region-of-interest (ROI) klassifiziert oder ausgewählt werden.

6. Verfahren nach einem der vorhergehenden Ansprüche, wobei Temperaturwerte (T) aus einem Bereich der größten 10 bis der größten 50 Werte aus der mindestens einen region-of-interest (ROI) klassifiziert oder ausgewählt werden.

7. Verfahren nach einem der vorhergehenden Ansprüche, wobei der Mittelwert (M) der klassifizierten Temperaturwerte (T) ein arithmetischer Mittelwert ist.

8. Verfahren nach einem der vorhergehenden Ansprüche, wobei die Bearbeitungsvorrichtung (20) eine Induktionsheizvorrichtung (104) zum Vorwärmen der Schicht (1) ist und eine Regelung umfasst, welche den Mittelwert (M) als Eingangswert erhält.

9. Verfahren nach einem der vorhergehenden Ansprüche, wobei in der additiven Herstellung des Bauteils (10) eine Vielzahl von regions-of-interest (ROI) bestimmt und/oder bearbeitet werden.

10. Verfahren nach Anspruch 8 oder 9, wobei die Regelung die Induktionsheizvorrichtung kontinuierlich regelt.

11. Verfahren gemäß einem der vorhergehenden Ansprüche, welches ein computerimplementiertes Verfahren ist.

12. Vorrichtung (100) zum Steuern einer Bearbeitungseinrichtung (20), insbesondere einer Induktionsheizvorrichtung, umfassend:

 - Mittel (CPP) zur Ausführung der Schritte des Verfahrens nach einem der vorhergehenden Ansprüche,
 - eine Temperaturerfassungseinrichtung (101),
 - einen Computer (102), und
 - eine Regelungseinrichtung (103), insbesondere einen PID-Regler.

13. Vorrichtung (100) gemäß Anspruch 12, welche Teil einer additiven Herstellungsanlage (200), insbesondere eine Anlage zur pulverbett-basierten additiven Fertigung ist.

14. Computerprogrammprodukt (CPP) umfassend Befehle, welche bei der Ausführung des Programms durch einen Computer diesen veranlassen, zumindest einen der Schritte b), c), d), e) nach einem der Ansprüche 1 bis 11 durchzuführen.

15. Verfahren zur additiven Herstellung eines Bauteils (10), umfassend den schichtweisen additiven Aufbau des Bauteils (10) aus einem pulverförmigen Basismaterial (B), wobei nach dem oder während des Verfestigens einer Pulverschicht (1) mittels eines Energiestrahls (105), diese Schicht (1) anhand des Verfahrens nach einem der Ansprüche 1 bis 11 mit der Bearbeitungseinrichtung (20) bearbeitet wird.

FIG 1

FIG 2

## FIG 3

## FIG 4

# FIG 5

EP 3 656 489 A1

Europäisches Patentamt
European Patent Office
Office européen des brevets

## EUROPÄISCHER RECHERCHENBERICHT

**Nummer der Anmeldung**

EP 18 20 7810

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 7 515 986 B2 (BOEING CO [US]) 7. April 2009 (2009-04-07) * Spalte 2, Zeile 62 - Spalte 6, Zeile 67 * * Abbildungen 1, 4 * | 1-15 | INV. B22F3/105 B33Y50/02 |
| A | US 2014/265046 A1 (BURRIS MATTHEW [US] ET AL) 18. September 2014 (2014-09-18) * Absätze [0081] - [0089] * | 1-15 | |
| A | US 2017/334144 A1 (FISH SCOTT [US] ET AL) 23. November 2017 (2017-11-23) * Absätze [0005], [0006] * | 1-15 | |
| X | CN 106 626 378 A (XI'AN JIAOTONG UNIV) 10. Mai 2017 (2017-05-10) * Absätze [0031] - [0042] * * Abbildungen 1, 3 * | 1-15 | |

RECHERCHIERTE SACHGEBIETE (IPC)

B22F
B33Y
B29C

Der vorliegende Recherchenbericht wurde für alle Patentansprüche erstellt

| Recherchenort | Abschlußdatum der Recherche | Prüfer |
|---|---|---|
| Den Haag | 19. Juni 2019 | Järvi, Tommi |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

14

**ANHANG ZUM EUROPÄISCHEN RECHERCHENBERICHT
ÜBER DIE EUROPÄISCHE PATENTANMELDUNG NR.**

EP 18 20 7810

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-06-2019

| Im Recherchenbericht angeführtes Patentdokument | Datum der Veröffentlichung | Mitglied(er) der Patentfamilie | Datum der Veröffentlichung |
|---|---|---|---|
| US 7515986 B2 | 07-04-2009 | KEINE | |
| US 2014265046 A1 | 18-09-2014 | CA 2900297 A1 | 18-09-2014 |
| | | CN 105188993 A | 23-12-2015 |
| | | EP 2969320 A1 | 20-01-2016 |
| | | JP 2016522312 A | 28-07-2016 |
| | | US 2014263209 A1 | 18-09-2014 |
| | | US 2014265046 A1 | 18-09-2014 |
| | | US 2014265047 A1 | 18-09-2014 |
| | | US 2014265048 A1 | 18-09-2014 |
| | | US 2014265049 A1 | 18-09-2014 |
| | | US 2014271328 A1 | 18-09-2014 |
| | | WO 2014144255 A2 | 18-09-2014 |
| | | WO 2014144482 A1 | 18-09-2014 |
| | | WO 2014144630 A1 | 18-09-2014 |
| US 2017334144 A1 | 23-11-2017 | US 2017334144 A1 | 23-11-2017 |
| | | WO 2017201120 A1 | 23-11-2017 |
| CN 106626378 A | 10-05-2017 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2601006 B1